**Europäisches Patentamt**

**European Patent Office**

**Office européen des brevets**

(19)

(11) Veröffentlichungsnummer: **0 224 516 B1**

(12) # EUROPÄISCHE PATENTSCHRIFT

(45) Veröffentlichungstag der Patentschrift:
06.03.91 Patentblatt 91/10

(51) Int. Cl.⁵: **F16K 1/24**

(21) Anmeldenummer: **86903221.9**

(22) Anmeldetag: **27.05.86**

(86) Internationale Anmeldenummer:
**PCT/DE86/00216**

(87) Internationale Veröffentlichungsnummer:
**WO 86/07122 04.12.86 Gazette 86/26**

(54) ABSPERRORGAN FÜR ROHRLEITUNGEN.

Teilanmeldung 89100270.1 eingereicht am 27/05/86.

(30) Priorität: 30.05.85 DE 3519375
05.10.85 DE 3535637
28.02.86 DE 3606509

(43) Veröffentlichungstag der Anmeldung:
10.06.87 Patentblatt 87/24

(45) Bekanntmachung des Hinweises auf die Patenterteilung:
06.03.91 Patentblatt 91/10

(84) Benannte Vertragsstaaten:
AT BE CH DE FR GB IT LI LU NL SE

(56) Entgegenhaltungen:
DE-A- 2 809 604
DE-A- 3 018 101

(56) Entgegenhaltungen:
DE-B- 1 072 035
DE-B- 1 076 456
DE-B- 1 138 289
FR-A- 496 005
FR-A- 2 253 171
FR-A- 2 535 432
US-A- 2 934 310
US-A- 3 477 690
US-A- 3 870 079

(73) Patentinhaber: SCHMIDT, Fritz
Im Höltken 13
W-4270 Dorsten 12 (DE)

(72) Erfinder: SCHMIDT, Fritz
Im Höltken 13
W-4270 Dorsten 12 (DE)

(74) Vertreter: Herrmann-Trentepohl, Werner,
Dipl.-Ing. et al
Schaeferstrasse 18
W-4690 Herne 1 (DE)

EP 0 224 516 B1

## Beschreibung

Die Erfindung betrifft ein Absperrorgan für Rohrleitungen gemäß dem Oberbegriff des Patentanspruches 1.

Derartige Absperrorgane geben in ihrer Stellung parallel zur Durchflußachse einen großen Querschnitt frei, so daß bei geringer Bauhöhe eine gute Einpassung in Rohrleitungen gegeben ist.

Die Erfindung geht von einem vorbekannten Absperrorgan dieser Art aus (DE-OS 31 23 843). Hierbei wird durch eine symmetrische Anordnung der Federn und deren Zusammenwirken mit exzentrisch angeordneten Nocken, welche zusammen den Mitnehmer des Getriebes bilden, sowie durch die Kraft der Federn der Eingriff mit dem Ansatz der Drehklappe aufrechterhalten. Sobald nämlich die Ringscheibe durch den gehäusefesten Anschlag an einer weitergehenden Drehbewegung durch die Kraft der Welle gehindert ist, dreht sich der Mitnehmer relativ zu der mit der Ringscheibe gegen Drehbewegungen festgehaltenen Drehklappe. Durch die dann einsetzende Axialbewegung der Drehklappe, welche durch den exzentrisch angeordneten Nocken nicht behindert wird und von dem Anschlag des benachbarten Nockens nicht gesperrt ist, werden die Federn gespannt, so daß bei Rückdrehung der Antriebswelle die Drehklappe mit der Kraft der Federn von ihrem gehäusefesten Sitz abgehoben wird. Erst wenn die translatorische Bewegung abgeschlossen ist, wird durch den Nocken die Rückdrehung in Offenstellung bewirkt.

Diese durch den Aufbau des vorbekannten Absperrorganes vorgegebene Wirkungsweise kann dann versagen, wenn der Druck des Mediums die Drehklappe in Schließrichtung belastet und die hiervon ausgehende Axialkraft die Federkraft der Federn übersteigt. Dadurch ist eine Rückdrehung der Drehklappe ausgeschlossen, weil zwar der Nocken möglicherweise dem Anschlag anliegt, aber nicht mit diesem in der erforderlichen Drehrichtung kraftschlüssig ist und weil der Nocken dem Drehklappenanschlag noch nicht anliegt und deswegen keine Drehbewegung übertragen kann.

Das vorbekannte Absperrorgan sieht eine Entlastung der Drehklappe von dem auf diese wirkenden Mediumdruck vor. Diese Entlastung wird dadurch bewirkt, daß die Drehklappe nur über eine Ringfläche mit dem Mediumdruck belastet ist, welche auch die Dichtkante aufweist. Daraus ergibt sich, daß der Mediumdruck nur in einer Richtung, nämlich so auf die Drehklappe wirken darf, daß er das Abheben der Drehklappe von ihrem gehäusefesten Sitz unterstützt und damit in Richtung der Federkraft wirkt.

Der Erfindung liegt die Aufgabe zugrunde, bei einem Absperrorgan der als bekannt vorausgesetzten Art die Abdichtung unabhängig von der Richtung des Mediumdrucks in der Rohrleitung zu gewährleisten.

Diese Aufgabe löst die Erfindung mit den Merkmalen des Patentanspruches 1. Weitere Merkmale der Erfindung sind Gegenstand der Unteransprüche.

Erfindungsgemäß wird das Abheben der Drehklappe von ihrem Sitz durch den Formschluß im Getriebe bewirkt und daher unabhängig vom Mediendruck erzwungen. Dabei sorgt die Führung der Drehklappe in der Ringscheibe dafür, daß eine relative Drehung von Ringscheibe und Drehklappe während der translatorischen Bewegung ausgeschlossen ist. Da andererseits die Drehklappe gegen Drehbewegung gesperrt ist, solange sie ihrem Sitz anliegt, wird die translatorische Bewegung erzwungen, bevor die Drehbewegung einsetzen kann. Da die Drehklappe in der Offenstellung mit ihrem Ansatz am Mitnehmer aufgehängt ist, unterstützt sie mit ihrem Gewicht die Drehbewegung in der Schließstellung. Das führt dazu, daß erst nach Abschluß der Drehbewegung die translatorische Bewegung im Getriebe ausgelöst wird. Die sich hieraus ergebenden Vorteile bestehen einerseits darin, daß die Drehklappe unabhängig von der Richtung des Mediumdruckes exakt funktioniert und daß andererseits ein einfaches Getriebe und damit eine gegenüber dem Stand der Technik auch vereinfachte Bauweise ermöglicht wird.

Es ist zwar bekannt, die Drehklappe, welche keine Ringscheibe aufweist, mit einem Ritzel über eine Zahnstange teilweise zu schwenken und translatorisch auf ihren Sitz aufzulegen (FR-PS 496 005). Anstelle der erfindungsgemäß vorgesehenen Führung der Drehklappe mit einer Ringscheibe sind bei dieser vorbekannten Drehklappe Führungskulissen an der Drehklappenrückseite angeordnet, welche mit einem gehäusefesten Anschlag zusammenwirken. Das führt zwangsläufig dazu, daß bei Rückdrehung der Antriebswelle die Drehklappe schwenkend von ihrem Sitz abgehoben wird, so daß die mit einer translatorischen Drehklappenbewegung zur Herstellung der Dichtberührung mit dem Sitz verbundenen Vorteile nicht erreicht werden.

Mit den weiteren Merkmalen des Patentanspruches werden in die betreffenden Ausführungsformen der Erfindung die vorbekannten Federn eingeführt, die jedoch im Gegensatz zum Stand der Technik nur die Aufgabe haben, Drehklappe und Ringscheibe zusammenzuhalten.

Durch die weitere Ausbildung der Erfindung nach dem Patentanspruch 3 wird die Klappe nach Andrücken an den gehäuseseitigen Sitz selbständig ohne eine gesonderte Verriegelungseinrichtung in dieser Stellung gehalten, weil das vorgesehene Schneckengetriebe selbsthemmend ist.

In der Ausführungsform nach dem Patentanspruch 4 wird die axiale Bewegungsphase durch bloße Drehbewegung der Antriebswelle eingeleitet, nachdem die Ringscheibe vor den gehäusefesten Anschlag geführt und an weiterer Drehung gehindert ist.

Die Erfindung wird im folgenden anhand der Zeichnungen näher erläutert. Es zeigen

Fig. 1 in Stirnansicht eine erste Ausführungsform eines Absperrorgans, das im Bereich der Antriebswelle im Schnitt dargestellt ist,

Fig. 2 das Absperrorgan in einer Zwischenstellung vor Beginn der axialen Schließbewegung gemäß einem Schnitt II-II in Fig. 1,

Fig. 3 das Absperrorgan in vollständig geöffnetem Zustand in einer analogen Darstellung zu Fig. 2,

Fig. 4 das Absperrorgan nach Anlegen der Klappe an den gehäuseseitigen Sitz in einer analogen Darstellung zu Fig. 2,

Fig. 5 eine zweite Ausführungsform des erfindungsgemäßen Absperrorgans in der Fig. 2 entsprechender Darstellung,

Fig. 6b eine weiter abgeänderte Ausführungsform des Absperrorgans in einer der Fig. 4 entsprechenden Darstellung.

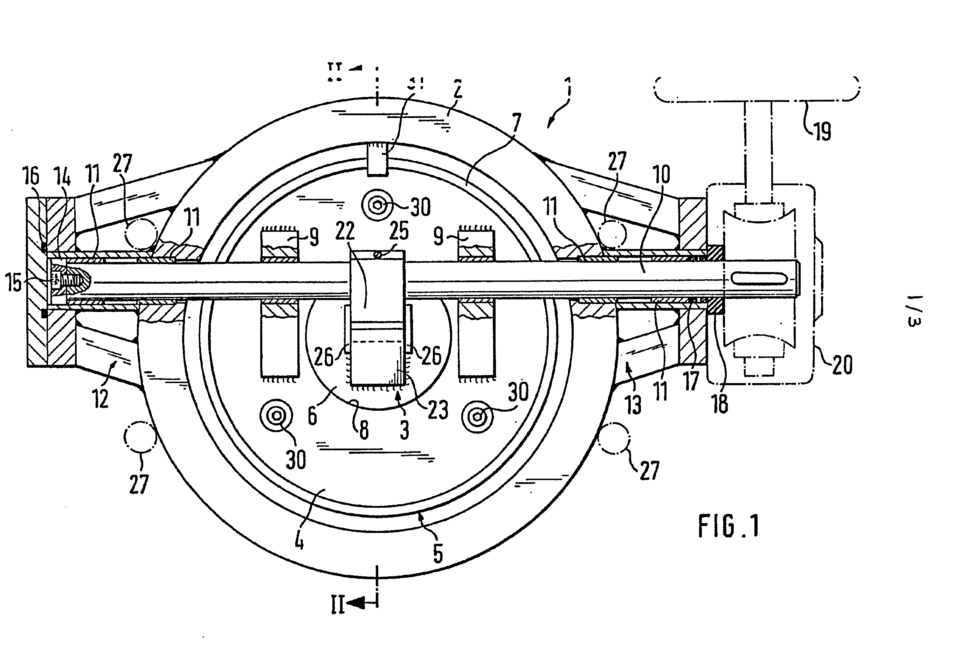

Die Figuren 1 bis 4 zeigen ein in beiden Richtungen gegen Mediumdruck abdichtendes Absperrorgan (1) mit einem rohrförmigen Gehäuse (2) und mit einer Ventilklappe (3), welche in einer Ringscheibe (4) axial verschiebbar geführt ist. Die Führung erfolgt dabei über einen zylindrischen Ansatz (6) der Ventilklappe (3), der in die Öffnung (8) in der Mitte der Ringscheibe (4) eingreift und über einen einseitigen Außenflansch (7) der Ventilklappe (3) die Ringscheibe (4) umfaßt.

Die Ringscheibe (4) sitzt mit zwei rückseitigen Loslagern (9) auf einer Antriebswelle (10), welche das Gehäuse (2) quer durchsetzt und doppelt exzentrisch, d.h. außerhalb der Längs- und Querachse der Ventilklappe (3) verläuft. Sie ist in Lagerbüchsen (11) in seitlichen Gehäusevorsprüngen (12,13) drehbar und fest in dem Gehäuse (2) gelagert. Eine Längsjustierung der Welle (10) ist über ein Justierstück (14) mit Imbusschraube (15) möglich. Die Abdichtung nach außen erfolgt mit mehreren Dichtringen (16 bis 18).

Die Antriebswelle (10) wird mit einem strichpunktiert dargestellten Handrad (19) stufenlos gedreht. Sie bildet den Eingang eines ebenfalls strichpunktiert angedeuteten Schneckenradgetriebes (20) mit Selbsthemmung.

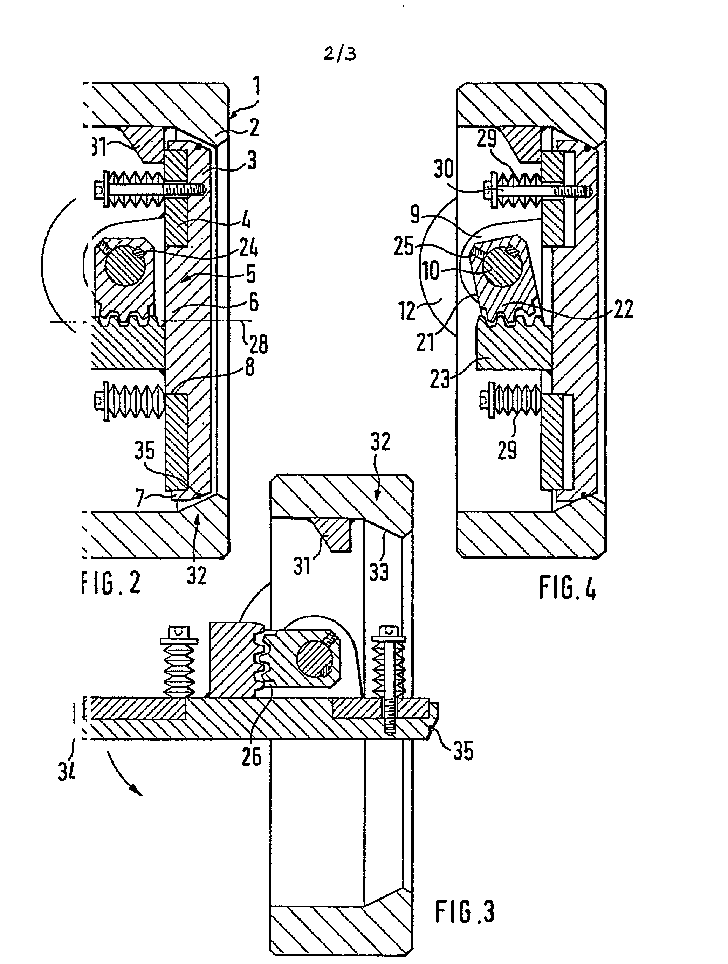

Im Gehäuseinneren sitzt ein selbsthemmendes Getriebe (21), mit dem die Ventilklappe (3) unter Führung durch die Ringscheibe (4) verschiebbar gelagert ist. Das Getriebe weist einen radial zur Antriebswelle (10) stehenden Mitnehmer auf, der auf einen Klappenansatz (23) wirkt. Dieser durchsetzt die Öffnung (8) der Ringscheibe (4). Gemäß dem Ausführungsbeispiel nach den Figuren 1 und 2 ist der Klappenansatz (23) an die Klappe (3) als angeschweißte Zahnstange ausgeführt. Der Mitnehmer (22) ist ein Ritzel, welches mittels einer Paßfeder (24) und einer Feststellschraube (25) drehfest auf der Welle (10) sitzt. Zur Verbesserung der Führung weist der Mitnehmer (22) zwei den Ansatz (23) seitlich einschließende, angeschraubte Wangen (26) auf.

Das Absperrorgan (1) wird an Rohrflansche mit Hilfe von Spannschrauben (27) angeflanscht.

Die Wirkungsweise ist in den Figuren 2 bis 4 dargestellt, welche verschiedene Stellungen der Ventilklappe (3) wiedergeben. Figur 3 zeigt die Offenstellung, in der die Ventilklappe (3) parallel zur Durchflußachse (28) steht und den Innenquerschnitt des Gehäuses (2) freigibt. In dieser Stellung liegen die Ventilklappe (3) und die Ringscheibe (4) unmittelbar aufeinander. Dadurch ergibt sich eine strömungsgünstige Form. In dieser Stellung werden die Ringscheibe (4) und die Ventilklappe (3) mit Rückstellfedern (29) zusammengehalten, welche Tellerfedern sind. Diese umgeben in die Rückseite der Ventilklappe (3) eingeschraubte Bolzenschrauben (30), welche die Ringscheibe mit Spiel durchsetzen. Ist wie dargestellt eine horizontale Anordnung der Antriebswelle oberhalb der Durchflußachse (28) gewählt, so ist auch ohne die Rückstellfedern (29) der Zusammenhalt der Ringscheibe und der Ventilklappe gewährleistet, weil sich die auf der Welle (10) frei drehbare Ringscheibe (4) durch ihr Eigengewicht auf der Ventilklappe (3) abstützt, die ihrerseits durch den Ansatz (23) und die getriebliche Verbindung des Mitnehmers (22) drehfest mit der Welle (10) verbunden ist.

Soll die Ventilklappe geschlossen werden, wird die Antriebswelle (10) gedreht. Die Ventilklappe (3) und die Ringscheibe (4) werden dann gemeinsam mit der Antriebswelle (10) gedreht, bis die Ringscheibe (4) gemäß der Darstellung der Figur 2 auf einen gehäuseseitigen Anschlag (31) trifft, der eine Position der Ventilklappe (3) senkrecht zur Durchflußachse (28) bestimmt. Bei weiterer Drehung der Antriebswelle (10) ist die Ringscheibe (4) auf dem Anschlag (31) gehäusefest abgestützt, so daß nunmehr die weitere Drehbewegung der Antriebswelle (10) die Selbsthemmung des Getriebes überwindet. Durch die Kopplung von Mitnehmer (22) und Klappenansatz (23) tritt dann eine axiale Verschiebung der Ventilklappe (3) relativ zur Ringscheibe (4) auf. Dabei werden die Rückstellfedern (29) zusammengedrückt. Durch diese Bewegung in Richtung der Druchflußachse (28) wird die Ventilklappe (3) schließlich entsprechend Figur 4 einem gehäuseseitigen Sitz (32) aufgelegt. Das Schneckengetriebe (20) und der Hebelarm zwischen Welle (10) und Klappenansatz (23) ermöglicht hohe Andruckkräfte. Im Ausführungsbeispiel nach den Figuren 1 bis 4 sind die Dichtflächen (33, 34) des gehäuseseitigen Sitzes (32) und der Ventilklappe (3) konisch bzw. keglig ausgeführt. Die Ventilklappe (3) weist eine zusätzliche Ringdichtung (35) auf. Das selbsthemmende Schneckengetriebe (20) sorgt dafür, daß stets eine ausreichende Andruckkraft auf den Dichtflächen (33, 34) wirksam ist. In der vollendeten Schließstellung nach Figur 4 bleibt die Ringscheibe (4) am Umfang von dem rückwärtigen Führungsflansch (7) der Ventilklappe (3) umfaßt, weil dessen Tiefe größer als der maximale axiale Verstellweg der Ventilklappe (3) gewählt ist.

Wird die Welle (10) in Gegenrichtung gedreht, so wird zunächst die Ventilklappe (3) axial gelüftet und dann zurückgezogen, bis sie sich der Ringscheibe (4) anlegt. Dies bewirken die Rückstellfedern (29). Die Gesamtanordnung wird in die Offenstellung nach Figur 3 oder eine beliebige Zwischenstellung geschwenkt.

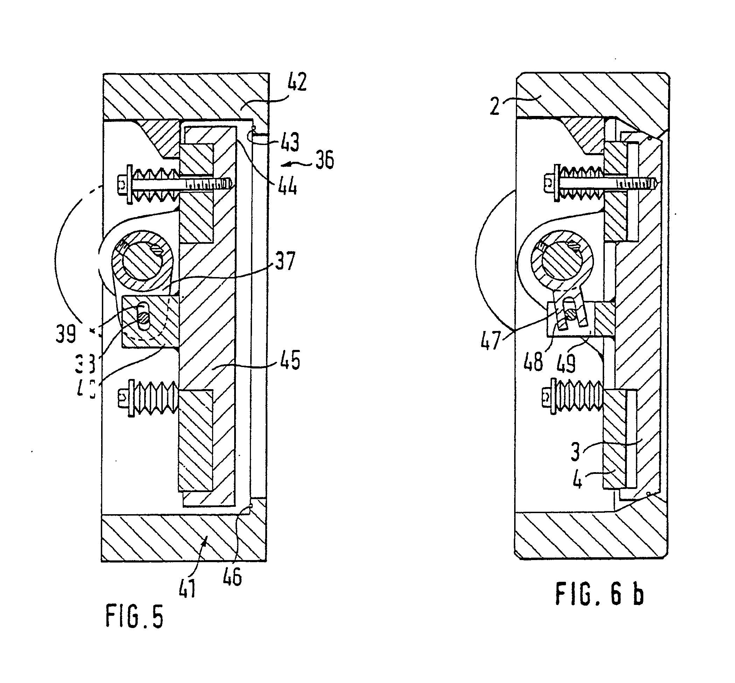

Figur 5 zeigt ein anderes Ausführungsbeispiel, in dem das Absperrorgan (36) mit seinen wesentlichen Teilen identisch mit dem Ausführungsbeispiel nach den Figuren 1 bis 4 aufgebaut ist. Bei dem Absperrorgan (36) ist jedoch der Mitnehmer als Hebel (37) ausgebildet, der mit einem Zapfen (38) in ein Querlangloch (39) des Klappenansatzes (40) eingreift. Außerdem weist der Sitz (41) des Gehäuses (42) eine stirnseitige, ebene Dichtfläche (43) auf, der sich eine ebenfalls stirnseitige Dichtfläche (44) der Absperrklappe (45) anlegt. Der Vorteil dieser Ausführungsform liegt darin, daß zwischen den beiden Dichtflächen (43, 44) keine gleitende Reibung und damit praktisch keine Abnutzungserscheinungen auftreten. Eine Ringdichtung (46), welche in die gehäuseseitige Dichtfläche (43) eingelassen sein kann, weist dann eine erhöhte Standzeit auf.

In der Darstellung nach Figur 6b entsprechen die Ventilklappe (3) und die Ringscheibe (4) dem Ausführungsbeispiel nach Figur 2. Der Mitnehmer ist jedoch eine Gabel (47), in welche ein Zapfen (48) des Klappenansatzes (49) eingreift.

## Ansprüche

1. Absperrorgan (1) mit einem in eine Rohrleitung einbaubaren Rohrgehäuse (2), einer das Rohrgehäuse quer durchsetzenden Antriebswelle (10) und einer in einer Ringscheibe (4) geführten Drehklappe (3), wobei die Ringscheibe mit Loslagern (9) auf der Antriebswelle sitzt und die Drehklappe mit der Antriebswelle durch ein Getriebe (21) verbunden ist, welches einen drehfest auf der Antriebswelle (10) sitzenden Mitnehmer (22, 37, 47) aufweist, der mit einem Ansatz (23, 40) der Drehklappe (3) derart zusammenwirkt, daß bei Anlage der Ringscheibe (4) an einem gehäusefesten Anschlag (31) die Drehklappe translatorisch einem gehäusfesten Sitz (33, 43) angelegt wird, wobei Rückstellfedern (29) zur Unterstützung des Zusammenhaltens von Drehklappe (3) und Ringscheibe (4) dienen, dadurch gekennzeichnet, daß der Mitnehmer (22) des Getriebes (21) in ständiger Verbindung mit dem Ansatz (23) der Drehklappe (3) steht, so daß die Drehklappe bei Rückdrehung der Antriebswelle (10) auch gegen eventuell wirkenden hohe Mediendrücke zwangsgeführt von ihrem Sitz (32) axial abgehoben wird und in der Offenstellung mit ihrem Ansatz (23) an dem Mitnehmer (22) aufgehängt ist, wobei die Rückstellfedern (29) als Tellerfedern ausgebildet sind, welche in die Rückseite der Ventilklappe (3) eingeschraubte Bolzenschrauben (30) umgeben, welche die Ringscheibe mit Spiel durchsetzen.

2. Absperrorgan nach Anspruch 1, dadurch gekennzeichnet, daß die Antriebswelle (10) über ein selbsthemmendes Schneckengetriebe (20) betätigbar ist.

3. Absperrorgan nach Anspruch 1 oder 2, dadurch gekennzeichnet, daß der Mitnehmer (22) als Ritzel und der Klappenansatz (23) als Zahnstange ausgebildet ist.

4. Absperrorgan nach Anspruch 1 oder 2, dadurch gekennzeichnet, daß der Mitnehmer als Hebel (37) ausgebildet ist, der mit einem Zapfen (38) in ein Querlangloch (39) des Klappenansatzes (40) eingreift.

5. Absperrorgan nach Anspruch 1 oder 2, dadurch gekennzeichnet, daß der Mitnehmer als Gabelstück (47) ausgebildet ist, in welches ein Zapfen (48) des Klappenansatzes (49) eingreift.

## Claims

1. Closure element (1) having a pipe housing (2) incorporated into a pipeline, a drive shaft (10) passing transversely through the pipe housing and a butterfly flap (3) arranged in an annular disc (4) whereby the annular disc is mounted on the drive shaft with loose bearings (9) and the butterfly flap is connected to the drive shaft by means of a gear (21), having a cam (22, 37, 47) mounted non rotatably on the drive shaft (10) which operates in conjunction with a projection (23, 40) on the butterfly flap (3) such that upon application of the annular disc (4) to a stop (31) fixed to the housing the butterfly flap is applied in a translatory manner to a seating (33, 43) fixed to the housing, whereby return springs (29) are used to assist the holding together of the butterfly flap (3) and the annular disc (4), characterised in that the cam (22) of the gear (21) is permanently linked with the projection (23) of the butterfly flap (3) so that the butterfly flap is positively axially raised from its seating (32) upon reverse rotation of the drive shaft (10) even against high median pressure which may have an effect and is held in the open position with its projection (23) on the cam (22), wherein the return springs (29) are formed as cup springs which surround expansion bolts (30) screwed into the reverse side of the valve flap (3), the bolts passing through the annular disc with clearance.

2. Closure element according to Claim 1, characterised in that the drive shaft (10) can be operated by means of a self-locking worm gear (20).

3. Closure element according to Claim 1 or 2, characterised in that the cam (22) is formed as a pinion and the flap projection (23) is formed as a rack.

4. Closure element according to Claim 1 or 2, characterised in that the cam is formed as a lever (37) which engages with a pin (38) in a transverse slot (39) of the flap projection (40).

5. Closure element according to Claim 1 or 2, characterised in that the cam is formed as an end piece fork (47) into which a pin (48) of the flap projection (49) engages.

## Revendications

1. Elément de fermeture (1) comportant un corps tubulaire (2) adapté à se monter sur une conduite tubulaire, un arbre de manoeuvre (10) qui passe transversalement dans le corps tubulaire et un obturateur pivotant (3) monté à coulisse dans un disque annulaire (4), ce disque annulaire étant monté fou sur l'arbre de manoeuvre par des paliers libres (10), et l'obturateur pivotant étant relié à l'arbre de manoeuvre par un mécanisme (21) qui comporte une pièce d'actionnement (22, 37, 47) clavetée sur l'arbre de manoeuvre (10) et prévue pour coopérer avec un appendice (23, 40) de l'obturateur pivotant (3), de telle manière que lorsque le disque annulaire (4) est venu en position d'appui contre une butée (31) du corps (2) l'obturateur pivotant subit un mouvement de translation qui l'amène en appui sur un siège (33, 43) solidaire du corps (2), des ressorts de rappel (29) étant prévus pour maintenir accolés ensemble l'obturateur pivotant (3) et le disque annulaire (4), caractérisé en ce que la pièce d'actionnement (22) du mécanisme de manoeuvre (21) est constamment en liaison avec l'appendice (23) de l'obturateur pivotant (3), si bien que celui-ci se trouve obligé de s'écarter axialement de son siège (32) lorsqu'on fait tourner l'arbre de manoeuvre (10) en sens inverse, même en cas de pressions antagonistes importantes du fluide contenu dans la conduite, et que l'obturateur mobile se trouve suspendu à la pièce d'actionnement (22) par son appendice (23) en position d'ouverture, les ressorts de rappel (29) étant constitués par des coupelles élastiques montées autour des tiges de fixation (30) vissées dans la face postérieure de l'obturateur mobile (3) et passant à travers le disque annulaire avec du jeu.

2. Elément de fermeture selon la revendication 1, caractérisé en ce que l'arbre de manoeuvre (10) est prévu pour être actionné par l'intermédiaire d'un mécanisme auto-bloquant à vis sans fin (20).

3. Elément de fermeture selon la revendication 1 ou 2, caractérisé en ce que la pièce d'entrainement (22) est constituée par un pignon, l'appendice (23) de l'obturateur mobile étant constitué par une crémaillère.

4. Elément de fermeture selon la revendication 1 ou 2, caractérisé en ce que la pièce d'entrainement est constituée par un levier (37) pourvu d'un doigt (38) engagé dans un trou transversal de forme allongée (39) de l'appendice (40) de l'obturateur mobile.

5. Elément de fermeture selon la revendication 1 ou 2, caractérisé en ce que la pièce d'entraînement est constituée par une fourchette (47) dans laquelle est engagé un doigt (48) de l'appendice (49) de l'obturateur mobile.

FIG.1

1/3

2/3

FIG. 2

FIG.4

FIG.3

EP 0 224 516 B1

FIG. 5

FIG. 6 b

8